(19) **Europäisches Patentamt / European Patent Office / Office européen des brevets**

(11) **EP 2 956 509 B1**

(12) **EUROPEAN PATENT SPECIFICATION**

(45) Date of publication and mention
of the grant of the patent:
**15.03.2017 Bulletin 2017/11**

(21) Application number: **14701294.2**

(22) Date of filing: **25.01.2014**

(51) Int Cl.:
**C09B 67/22** (2006.01) **G03G 9/09** (2006.01)

(86) International application number:
**PCT/EP2014/000201**

(87) International publication number:
**WO 2014/124734 (21.08.2014 Gazette 2014/34)**

(54) **BLACK PIGMENT COMPOSITION**

SCHWARZE PIGMENTZUSAMMENSETZUNG

COMPOSITION DE PIGMENTS NOIRS

(84) Designated Contracting States:
**BE DE FR GB IT NL**

(30) Priority: **14.02.2013 JP 2013026489**

(43) Date of publication of application:
**23.12.2015 Bulletin 2015/52**

(73) Proprietor: **Clariant International Ltd**
**4132 Muttenz (CH)**

(72) Inventors:
• **HARADA, Daisuke**
**Shimada city,**
**Shizuoka 428-0017 (JP)**

• **ICHIHARA, Yuya**
**Fukuroi city,**
**Shizuoka 437-0039 (JP)**

(74) Representative: **Hütter, Klaus**
**Clariant Produkte (Deutschland) GmbH**
**Patent Management**
**Industriepark Höchst, G 860**
**65926 Frankfurt am Main (DE)**

(56) References cited:
**WO-A1-2005/040934    JP-A- H09 329 912**

**Description**

BACKGROUND OF THE INVENTION

1. Field of the Invention

The present invention relates to a black pigment composition used in electrophotographic toners, inks or coatings and the like, which can be used as an alternative to conventional carbon black and has superior properties such as hue.

2. Description of the Related Art

Carbon black is a pigment that is inexpensive, has high light-shielding performance and superior electrical conductivity, and has conventionally been used in various applications such as coatings, printing inks, toners and inkjet inks. Accompanying the growing number of pigment applications and demands for improved performance, the superior properties of carbon black have conversely become drawbacks in specific fields, thus creating a need for a pigment able to be used as an alternative to carbon black capable of overcoming these drawbacks.

For example, in the case of electrophotographic toners, since the image formation principle thereof consists in attaching a toner having an opposite charge to an electrostatic pattern on a photoconductor, electrically conductive toners may lead to leakage of that charge. As a result, the amount of electric charge on the toner particles varies depending on the development conditions and due to this, the image qualities such as image density and resolution may change. In the case of color electrophotography in particular, since non-electrically conductive pigments are frequently used for colors other than black, charging behavior differs between black and other chromatic colors, and attachability of a toner onto an electrostatic pattern thus also varies between black and other chromatic colors, it is difficult to obtain uniform color image qualities.

In addition, carbon black pigments used in electrophotographic toners, printing inks and the like do not have a completely neutral achromatic color and are rather more or less brownish or bluish black. Therefore, in order to obtain a neutral black color, efforts such as addition of a correcting chromatic pigment to carbon black were previously carried out (JP4571585B). However, this neutralization technology of black also cannot satisfy quality requirements without difficulty due to considerable fading of chromatic pigments. Therefore, there has been a demand for a pigment composition which enables neutralization of a carbon black pigment by adding it to the latter and making the tinge thereof vanish, and has high stability.

As a means for solving the aforementioned problem, it is considered to replace a carbon black pigment with a black pigment composition which is a mixture of conventional chromatic pigments. However, since a carbon black pigment has a high coloring strength, it can enhance image density even if the amount thereof in the toner is small, and allows a reduced toner thickness for obtaining a desired image density and, as a result, makes it possible to achieve high image resolution. In contrast, conventional methods comprising mixing chromatic pigments to obtain a black pigment composition are not sufficient from the viewpoint of resolution, because the coloring strength of these chromatic pigments is low.

Moreover, for applications other than electrophotography such as where infrared radiation-transparent heat shielding black coatings are required, the use of carbon black is difficult because it has high absorption at an infrared wavelength. Although numerous alternative black pigment compositions comprised of combinations of chromatic pigments have been proposed in the past (JP2011068737A), it is necessary to improve the performance of these compositions with respect to, for example, considerable fading which occurs when they are exposed to sunlight. JP H09 329912 A discloses an electrostatic charge image developing toner for flash fixing comprising black pigments and chromatic pigments such as red quinacridone and rhodamine colorants.

SUMMARY OF THE INVENTION

An object of the present invention is to improve conventional carbon black pigments regarding their drawbacks, and to provide a black pigment composition which, when used as a toner colorant, for example, is able to improve image quality through improvement in charging behavior such as charge leakage and the like, while also only undergoing little color fading over time.

With the foregoing in view, the present inventors conducted extensive studies to overcome the drawbacks of the related art and, as a result, obtained the following guidelines for achieving the object of the present invention.

(1) In order to make visual changes appear as minimal as possible when fading occurs, it is preferable to use a pigment which has as broad an absorption spectrum as possible and combine it with other pigments.

(2) As a guideline for searching for the combination of pigments described in (1) above, a pigment having favorable color tone and fading stability is easily obtainable by, on the basis of the visible wavelength region of 400 nm to 700 nm being divided into two portions, combining a pigment P1 having a maximum visible absorption wavelength $\lambda_{max}$ within the range of 460 nm to 530 nm and a half-value wavelength of the absorption spectrum (long wavelength side) of 550 nm or more, and a pigment P2 having a maximum visible absorption wavelength within the range of 600 nm to 700 nm, thereby controlling the optical properties of the pigment.

(3) Particularly when, for pigment P1 described in (2) above, use is made of an organic pigment, which is designated in the Color Index by the term "brown", the resulting composition has optical properties appropriate for achieving the object of the present application, and also reduced electric conductivity.

(4) Moreover, particularly when, for pigment 2 to be combined with pigment P1 described in (2) and (3) above, use is made of a phthalocyanine pigment, a favorable performance can be obtained with respect to all of the properties of hue, color fading, electrical conductivity and infrared transmittance.

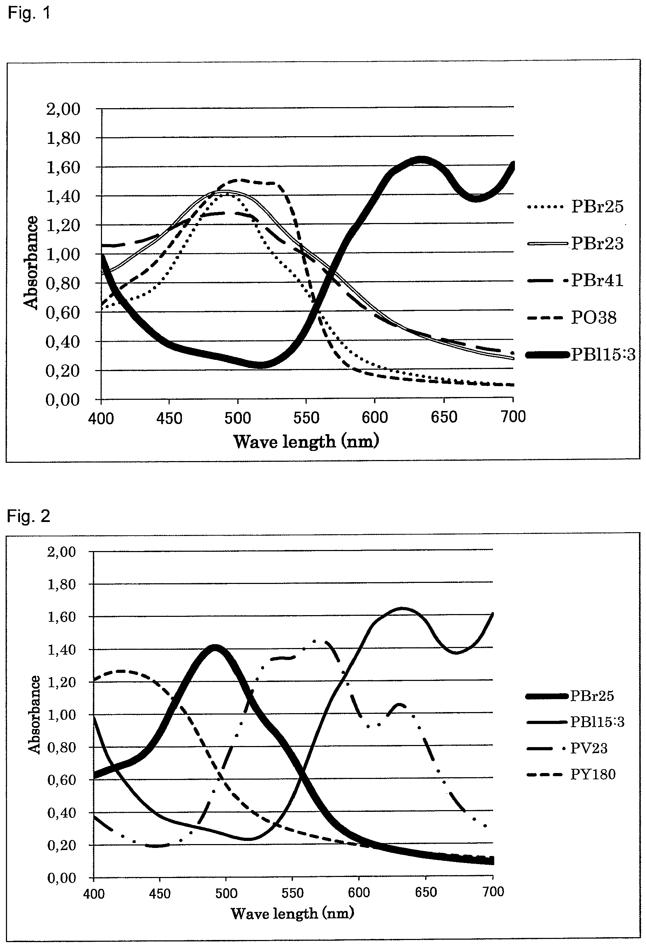

The mechanism of the above-mentioned (1) to (4) can be explained based on the spectral curve of brown and cyan pigments. FIG. 1 shows the absorption spectra of solutions obtained by dispersing preferable pigments of the present invention in a methyl ethyl ketone solvent along with a dispersant (pigment concentration: 0.02 % by weight). As is shown thereby, the maximum absorption wavelength of the brown pigment (Pigment Brown 25) is present within the range of 460 nm to 530 nm, and the absorption decays on and from the half-value wavelength of the absorption spectrum (long wavelength side) of 550 nm. Cyan pigments thus have properties opposite to those of brown pigments. Therefore, by using these pigments in combination, the absorption properties thereof can complement each other so that the overall absorption extends over the entire visible wavelength region. It has been found that the utilization of such characteristics enables the obtaining of a black pigment composition able to be used as an alternative to carbon black using only these two types of pigments. Since the entire visible region can be covered with only these two types of pigments having a broad absorption spectrum in this manner, even if one of the pigments partially fades, there will be no significant impairment of spectral flatness as a whole, and this results in a low degree of visual manifestation of tinge.

On the basis of the above-mentioned guidelines, searching for third and fourth pigments and optimization of component ratios were carried out and, as a result, a pigment composition has been found, which has a favorable black color, favorable color retention and low electrical conductivity, thereby arriving at the present invention.

Accordingly, the present invention relates to:

(1) A black pigment composition, comprising, as essential pigments thereof, a pigment P1 having a maximum absorption wavelength $\lambda_{max}$ (nm) within the range of $460 \leq \lambda_{max} \leq 530$ and a half-value wavelength of the absorption spectrum (on the long wavelength side) of 550 nm or more, and a pigment P2 having a maximum absorption wavelength $\lambda_{max}$ (nm) within the range of $600 \leq \lambda_{max} \leq 700$, as measured in the form of a dispersion in methyl ethyl ketone, according to claim 1.

(2) A black pigment composition as set forth (1) above, wherein the pigment P1 is one or more pigments selected from the group consisting of C.I. Pigment Brown 23, Pigment Brown 25, Pigment Brown 41 and Pigment Red 38.

(3) A black pigment composition as set forth in (1) or (2) above, wherein the pigment P2 is one or more pigments selected from the group consisting of C.I. Pigment Blue 15, Pigment Blue 15:1, Pigment Blue 15:2, Pigment Blue 15:3, Pigment Blue 15:4, Pigment Blue 15:5, Pigment Blue 15:6 and Pigment Blue 16.

(4) A black pigment composition as set forth in any of (1) to (3) above, further comprising one or more other pigments P3 having an absorption peak wavelength $\lambda_p$ (nm) within the range of $530 < \lambda_p < 600$.

(5) A black pigment composition as set forth in (4) above, wherein the pigment P3 is one or more pigments selected from the group consisting of C.I. Pigment Orange 34, Pigment Orange 36, Pigment Orange 38, Pigment Orange 43, Pigment Orange 62, Pigment Orange 68, Pigment Orange 70, Pigment Orange 72, Pigment Orange 74, Pigment Red 31, Pigment Red 48:4, Pigment Red 57:1, Pigment Red 122, Pigment Red 146, Pigment Red 147, Pigment Red 150, Pigment Red 184, Pigment Red 238, Pigment Red 242, Pigment Red 254, Pigment Red 269, Pigment Violet 19, Pigment Violet 23 and Pigment Violet 32.

(6) A black pigment composition as set forth in any of (1) to (5) above, further comprising one or more other pigments P4 having an absorption peak wavelength $\lambda_p$ (nm) within the range of $400 < \lambda_p < 460$.

(7) A black pigment composition as set forth in (6) above, wherein the pigment P4 is one or more pigments selected from the group consisting of C.I. Pigment Yellow 74, Pigment Yellow 120, Pigment Yellow 139, Pigment Yellow 151, Pigment Yellow 155, Pigment Yellow 180, Pigment Yellow 181, Pigment Yellow 185, Pigment Yellow 213, Pigment Green 7, Pigment Green 36, Pigment Red 254 and Pigment Orange 43.

(8) A black pigment composition as set forth in any of (1) to (7), wherein the pigment composition ratio in parts by weight of (P1+P2):P3:P4 is 60 to 100 : 0 to 40 : 0 to 40 based on 100 parts by weight of the total of pigments P1, P2, P3 and P4, and the pigment composition ratio in parts by weight of P1 :P2 is 31 to 69 : 69 to 31 based on 100 parts by weight of the total of pigments P1 and P2.

(9) A composition for a printing ink, plastic composition, dry electrophotographic developer, wet electrophotographic developer, inkjet ink, color filter resist ink, paint, varnish, or powder coating, comprising, at least, a black pigment composition as set forth in any of (1) to (8) above and a binder resin.

(10) A composition as set forth in (9) above, wherein the binder resin is selected from a vinyl chloride resin, an acrylic resin, an acrylic-silicone resin, a styrene-acrylic resin, a silicone resin, a fluororesin, an urethane resin, an unsaturated or saturated polyester resin, an epoxy resin, a PET resin, a polycarbonate resin and a plant-derived (biomass) resin.

As can be understood from the above, according to the present invention, a carbon black pigment is not used or the amount thereof used can be reduced and therefore, in toner applications, the amount of charges on toners becomes stable, leading to an improvement in image qualities. In addition, image retention is also improved since there only occurs little fading over time.

Moreover, in toner applications, instead of complete replacement of carbon black, it is also possible to partially replace carbon black with the pigment composition according to the present invention which has been prepared so as to correct the hue of carbon black to a neutral black and, thereby, to obtain good image qualities.

Moreover, the pigment composition according to the present invention has high optical transmittance in the infrared wavelength region. By taking advantage of this property, favorable performance can be also obtained when it is used as a pigment composition for sunlight-shielding coatings.

BRIEF DESCRIPTION OF THE DRAWINGS

FIG. 1 is a drawing showing the absorption spectrum of each solution obtained by dispersing preferable pigment P1 or P2 according to the present invention in a methyl ethyl ketone solvent along with a dispersant (pigment concentration: 0.02 % by weight); and

FIG. 2 is a drawing showing the absorption spectrum of each solution obtained by dispersing preferable pigment P1, P2, P3 or P4 according to the present invention in a methyl ethyl ketone solvent along with a dispersant (pigment concentration: 0.02% by weight).

DESCRIPTION OF THE PREFERRED EMBODIMENTS

Pigment P1 used in the present invention optimally has a maximum absorption wavelength $\lambda_{max}$ (nm) within the range of $460 \leq \lambda_{max} \leq 530$ and preferably $480 \leq \lambda_{max} \leq 510$, and has a half-value wavelength (long wavelength side) of 550 nm or more. If the maximum absorption wavelength is less than 460 nm or exceeds 530 nm, then color difference increases and coloring strength decreases. If the half-value wavelength is less than 550 nm, color difference from carbon black increases and color difference when color fading occurs also increases. In addition, there are also problems such as decreased coloring strength.

Pigment P1, which is an essential pigment according to the present invention, is selected from the group consisting of monoazo pigments, disazo pigments, condensed azo pigments, naphthol AS pigments and benzimidazolone pigments, examples thereof including C.I. Pigment Brown 23, Pigment Brown 25, Pigment Brown 26, Pigment Brown 41 and Pigment Red 38. These pigments can be used alone or as a combination of two or more.

Pigment P2 preferably used in the present invention in combination with pigment P1 has a maximum absorption wavelength $\lambda_{max}$ (nm) within the range of $600 \leq \lambda_{max} \leq 700$ and preferably $620 \leq \lambda_{max} \leq 660$. If the maximum absorption wavelength $\lambda_{max}$ (nm) exceeds or is below the above-mentioned ranges, problems may occur such as increases in color difference, decreases in coloring strength, and increases in color difference when color fading occurs, again. Examples of such a pigment include phthalocyanine pigments C.I. Pigment Blue 15, Pigment Blue 15:1, Pigment Blue 15:2, Pigment Blue 15:3, Pigment Blue 15:4, Pigment Blue 15:5, Pigment Blue 15:6 and Pigment Blue 16, as well as Pigment Blue 56, Pigment Blue 60 or 61 and Pigment Blue 80. These pigments can be used alone or in a combination of two or more.

The black pigment composition according to the present invention, which comprises pigments P1 and P2 as essential pigments, may further comprise at least one pigment P3 and/or pigment P4 selected from the group consisting of violet, magenta, yellow or red, green and orange pigments in order to make the hue closer to carbon black or approximate to a more neutral black or else further increase the coloring strength.

Pigment P3, which is optionally used in combination with pigments P1 and P2 in the black pigment composition according to the present invention, has an absorption peak wavelength $\lambda_p$ (nm) within the range of $530 < \lambda_p < 600$ and preferably $540 < \lambda_p < 590$. Here, the absorption peak of pigment P3 may be either the main absorption peak (absorption maximum) or a subsidiary absorption peak. For example, use can be made of pigments suitably selected from violet pigments, magenta pigments, red pigments and orange pigments. Examples of such pigments that can be suitably selected and used include monoazo, disazo, β-naphthol, naphthol AS, azo lake, metal complex, benzimidazolone, anthanthrone, anthraquinone, quinacridone, dioxazine, perylene, thioindigo, triaryl carbonium and diketopyrrolopyrrole pigments. Specific examples of pigments having an absorption peak wavelength within the range of $530 < \lambda_p < 600$ include, for violet pigments, particularly C.I. Pigment Violet 19, Pigment Violet 23 or Pigment Violet 32; for magenta or red pigments, particularly C.I. Pigment Red 2, Pigment Red 3, Pigment Red 4, Pigment Red 5, Pigment Red 9, Pigment Red 12, Pigment Red 14, Pigment Red 31, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 150, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 238, Pigment Red 242, Pigment Red 247, Pigment Red 253, Pigment Red 254, Pigment Red 256, Pigment Red 257, Pigment Red 262, Pigment Red 263, Pigment Red 266, Pigment Red 269 or Pigment Red 274; and for orange pigments, particularly C.I. Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 72 or Pigment Orange 74. These pigments can be used alone or in a combination of two or more.

Pigment P4, which is optionally used in combination with pigments P1 and P2 in the present invention, has a peak absorption wavelength $\lambda_p$ (nm) within the range of $400 < \lambda_p < 460$. In this case as well, the absorption peak of pigment P4 may be either the main absorption peak (absorption maximum) or a subsidiary absorption peak. For example, pigment P4 is selected from monoazo, disazo, benzimidazoline, isoindolinone, isoindoline and perinone pigments.

Particularly preferable examples of pigments having an absorption peak wavelength within the range of 400 nm $< \lambda_p < 460$ nm include C.I. Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 185, Pigment Yellow 191, Pigment Yellow 194, Pigment Yellow 196 or Pigment Yellow 213, Pigment Yellow 214 and Pigment Yellow 217.

Other examples of pigment P4 which can be used include green pigments such as Pigment Green 7 and Pigment Green 36. This is because green pigments have a subsidiary absorption peak within the range of 400 nm $< \lambda_p < 460$ nm and thus provide an effect similar to that of yellow pigments. In addition, Pigment Red 254 and Pigment Orange 43 etc., which can be also used as pigment P3, have a subsidiary absorption peak within the range of 400 nm $< \lambda_p < 460$ nm. Thus, such pigments having an absorption peak within the range of 400 nm $< \lambda_p < 460$ nm, in addition to a peak within the range of 530 nm $< \lambda_p < 600$ nm, can also be used as pigment P4 depending on the selection for pigment P3, or vice versa. The aforementioned pigments P4 can be used alone or in a combination of two or more.

In an embodiment, the pigment component of the black pigment composition according to the present invention consists of pigments P1 and P2. In this case, the composition ratio thereof in parts by weight is preferably 31 to 69 : 69 to 31, more preferably 35 : 65 to 65 : 35 and particularly preferably 40 : 60 to 60 : 40 based on 100 parts by weight of the total of P1 and P2 from the viewpoint of color difference when compared with carbon black as a control and also coloring strength.

Possible combinations of pigments P1 and P2 with pigments P3 and/or P4 include the combination of P1, P2 and P3, the combination of P1, P2 and P4, and the combination of P1, P2, P3 and P4, and the composition ratios in parts by weight in these cases are as follows based on 100 parts by weight of the total of pigments P1 and P2, and P3 and/or P4 from the viewpoint of obtaining an ideal color tone or coloring strength:

for P1 + P2 + P3,

$$60 \le (P1 + P2) < 100$$

and

$$0 < P3 \le 40;$$

for P1 + P2 + P4,

$$60 \le (P1 + P2) < 100$$

and

$$0 < P4 \le 40;$$

and
for P1 + P2 + P3 + P4,

$$60 \le (P1 + P2) < 100,$$

$$0 < P3 < 40,$$

and

$$0 < P4 < 40.$$

The composition ratio in parts by weight of P1:P2 in these cases is preferably 31 to 69 : 69 to 31, more preferably 35 : 65 to 65 : 35, and particularly preferably 40 : 60 to 60 : 40, based on 100 parts by weight of the total of P1 and P2, as was previously described.

Among the above-mentioned organic pigments, particularly preference is given to those having light stability of greater than 5, and particularly greater than 6, according to the blue wool scale in which standard fabrics as samples dyed with eight types of dyes having different degrees of fading are placed in the same environment, followed by comparing the degree of fading of each fabric with blue scales and numerically rating the fabric on a scale of 1 to 8; light stability testing index of international standards; DIN ISO12040. Examples of such pigments include azo pigments such as C.I. Pigment Brown 23, Pigment Brown 25 or Pigment Brown 41; and phthalocyanine pigments such as C.I. Pigment Blue 15, Pigment Blue 15:1, Pigment Blue 15:2, Pigment Blue 15:3, Pigment Blue 15:4, Pigment Blue 15:5 or Pigment Blue 15:6.

The surface of the pigment used in the present invention may be modified by a chemical operation such as sulfonation or diazotization depending on the purpose and need. Surface-modified pigments to which a neutral or charged functional group or a polymer chain has been imparted are also useful, and these surface-modified pigments are also known as self-dispersing pigments or graft pigments.

It is preferable that the pigments used be divided into extremely fine particles in terms of color tone, transparency and the like. Preferably 95 %, and more preferably 99 %, of the pigment particles have a particle diameter of 500 nm or less. Moreover, the particle diameter in the finished product is preferably 30 nm to 400 nm and more preferably 50 nm to 200 nm. If the particle diameter is equal to or greater than these ranges, impairment in hue and transparency are observed, and further resolution also decreases due to decreased coloring strength. In addition, if the particle diameter is equal to or less than these ranges, pigment particles tend to aggregate, their dispersed state easily becomes unstable, and energy required for finely dividing the pigment increases, which is disadvantageous in terms of cost. The particle diameter of pigment particles as referred to here refers to particle size distribution obtained by observing Brownian movement of the pigment in a liquid according to the photon correlation method. For example, the particle size can be measured using ELS-Z (Otsuka Electronics). In addition, since the shape of the pigment particles used may vary over a wide range, the viscosity behavior of a pigment preparation also may vary over a wide range depending on the particle shape.

The pigment composition according to the present invention can be obtained based on the above-mentioned guidelines and, for example, it can be produced according to the following method. More specifically, the pigment composition according to the present invention can be obtained in a conventional method by placing individual pigments P1 and P2, and optionally pigments P3 and/or P4, which have been dried and ground separately, in a mixer such as a Nauta mixer, Super Mixer or Henschel mixer at a predetermined weight ratio based on the above-mentioned guidelines so as to be close to the black color of carbon black, and uniformly mixing the pigments. In a preferable embodiment, aqueous slurries of two or more pigments are mixed, followed by filtering, washing, and then drying and grinding. In the above-mentioned preparation method, a surfactant can be used in combination when preparing an aqueous dispersion of a pigment. Examples of surfactants include anionic surfactants, nonionic surfactants and cationic surfactants.

Examples of anionic surfactants include sodium dodecyl benzene sulfonate, sodium dialkyl sulfosuccinate and sodium polyoxyethylene alkyl ether sulfate.

Examples of nonionic surfactants include polyoxyethylene lauryl ethers, polyoxyethylene nonyl phenyl ethers and sorbitan fatty acid esters.

Examples of cationic surfactants include stearyl trimethyl ammonium chloride and distearyl dimethyl ammonium chloride.

In the above-mentioned preparation method, the amount of surfactant used is normally 10 parts by weight or less and preferably within the range of 3 parts by weight to 10 parts by weight, relative to 100 parts by weight of the total of the pigments. An amount of surfactant used of greater than 10 parts by weight is not preferable, because, in this case, there is a tendency that undesirable phenomena such as increased formation of blisters when a coating film is formed may occur.

The pigment composition according to the present invention is composed of organic chromatic pigments, but it may also be in the form of a mixture with an organic dye if necessary. The pigment composition can be used not only in the form of dry powder, but also in the form of a water-containing press cake. Examples of useful organic dyes include reactive dyes, acidic dyes, oil-soluble dyes and disperse dyes.

In addition to the above-mentioned compounds, depending on the intended application, the pigment composition according to the present invention may further comprise further additives customary particularly for ink jet inks and in the printing and coating industry, such as for example pigment dispersants, preservatives, photostabilizers, antioxidants, cationic, anionic, amphoteric or nonionic surface-active substances (surfactants and wetting agents), degassers/defoamers and also agents for regulating the viscosity, for example polyvinyl alcohol, cellulose derivatives or water-soluble natural or artificial resins and polymers as film-formers or binders to enhance the adhesion and abrasion resistance.

The pigment composition of the present invention can be used as powder, but, if necessary, it is also possible to add a liquid or a solvent thereto and subject it to dispersion and processing appropriate for the intended use. Dispersion is carried out by mixing the pigment composition with a suitable amount of a solvent, dispersant and others, followed by kneading and the like.

In this case, examples of useful solvents used for pigment dispersion include mono- or polyhydric alcohols, ethers and esters thereof, e.g. alkanols, in particular having 1 to 4 carbon atoms, such as e.g. methanol, ethanol, propanol, isopropanol, butanol, isobutanol; di- or trihydric alcohols, in particular having 2 to 6 carbon atoms, e.g. ethylene glycol, propylene glycol, 1,3-propanediol, 1,4-butanediol, 1,5-pentanediol, 1,6-hexanediol, neopentyl alcohol, 1,2,6-hexanetriol, glycerol, 2-ethyl-2-hydroxymethyl-1,3-propandiol, diethylene glycol, triethylene glycol, polyethylene glycol, dipropylene glycol, tripropylene glycol, polypropylene glycol; lower alkyl ethers of polyhydric alcohols, such as e.g. ethylene glycol monomethyl or ethyl or butyl ether, triethylene glycol monomethyl or ethyl ether; ketones and ketone alcohols, such as e.g. acetone, methyl ethyl ketone, di-ethyl ketone, methyl isobutyl ketone, methyl pentyl ketone, cyclopentanone, cyclohexanone, diacetone alcohol; amides, such as e.g. dimethylformamide, dimethylacetamide and N-methylpyrrolidone.

The pigment composition according to the present invention is also useful as a colorant in electrophotographic toners and developers, for example, one component and two component powder toners or developers, magnetic toners, liquid toners, polymerization toners and also other specialty toners. For use as a toner, it is usually necessary to mix a pigment with a binder, and typical toner binders for this are addition polymerization, polyaddition and polycondensation resins, e.g., styrene, styrene-acrylate, styrene-butadiene, acrylate, polyester or phenolic epoxy resins, poloysulfones and polyurethanes, individually or in combination, and also polyethylene and polypropylene, which may include yet further ingredients, such as charge control agents, waxes or flow agents.

The pigment composition according to the present invention is preferable for use in electrophotographic toners, and particularly in polymerization toners, but, without being limited to the above, the present invention also provides use thereof as colorants in coating applications such as heat-shielding coatings, inkjet inks, printing inks and color filters.

By ink jet inks are meant not only water-borne inks (including microemulsions), but also solvent-borne inks, UV-curable inks and also hotmelt inks.

Water-borne inkjet inks comprise essentially 0.5% to 30% by weight and preferably 1 % to 15 % by weight of one or more pigment compositions according to the present invention, 70 % to 99.5 % by weight of water, 0 % to 30 % by weight of one or more additives and/or organic solvents.

Water-borne ink jet inks may optionally further comprise water-soluble binders and further additives, for example, surfactants and wetting agents, defoamers, preservatives and antioxidants.

Solvent-borne ink jet inks essentially comprise 0.5 % to 30 % by weight of one or more pigment compositions according to the invention, and 70 % to 99.5 % by weight of an organic solvent or solvent mixture. If desired, solvent-borne ink jet inks may include carrier materials and binders which are soluble in the solvent, for example, polyolefins, natural and synthetic rubber, polyvinyl chloride, vinyl chloride-vinyl acetate copolymers, polyvinyl butyrals, wax/latex systems or combinations thereof.

UV-curable inks include essentially 0.5 % to 30 % by weight of one or more pigment compositions according to the invention, 0.5 % to 99.5 % by weight of water, 0.5 % to 99.5 % by weight of an organic solvent or solvent mixture, 0.5 % to 50 % by weight of a radiation-curable binder and optionally 0 % to 10 % by weight of a photoinitiator.

Hot melt inks are usually based on waxes, fatty acids, fatty alcohols or sulfonamides which are solid at room temperature and liquefy on heating, the preferred melting range being between about 60 and about 140 °C. The present invention also provides a hot melt ink jet ink consisting essentially of 20 % to 90 % by weight of wax and 1 % to 10 % by weight of one or more pigment compositions according to the present invention. It may further include 0 % to 20 % by weight of an additional polymer (as "dye dissolver"), 0 % to 5 % by weight of a dispersing assistant, 0 % to 20 % by weight of a viscosity modifier, 0 % to 20 % by weight of a plasticizer, 0 % to 10 % by weight of a tack additive, 0 % to 10 % by weight of a transparency stabilizer (which prevents for example crystallization of the wax) and also 0 % to 2 % by weight of an antioxidant.

Printing inks, in particular ink jet inks, according to the present invention can be prepared by dispersing the pigment composition into a microemulsion medium or into an aqueous or non-aqueous medium, or into a medium for preparing a UV-curable ink, or into a wax for preparing a hot melt ink jet ink.

The printing inks obtained are subsequently filtered (through a 1 $\mu$m filter, for example) for ink jet applications.

The pigment composition according to the present invention is useful in all conventional ink jet printers, in particular those which are based on the bubble jet or piezo process.

The pigment composition according to the present invention can be used for printing paper, natural or synthetic fiber materials, films or plastics, and further for forming an image on or printing a wide variety of coated or uncoated substrate materials, for example, for paperboard, cardboard, wood and wood-based materials, metallic materials, semiconductor materials, ceramic materials, and glasses.

The pigment composition according to the present invention can be used in plastic applications and for pigmenting high molecular mass organic materials of natural or synthetic origin. Examples of high molecular mass organic materials which can be pigmented with the pigment composition according to the present invention include cellulose compounds, such as cellulose ethers and cellulose esters, for example, such as ethylcellulose, nitrocellulose, cellulose acetates or cellulose butyrates, natural binders, such as fatty acids, fatty oils, resins and their modification products, or synthetic resins, such as polycondensates, polyadducts, addition polymers and addition copolymers, such as amino resins, especially urea-formaldehyde and melamine-formaldehyde resins, alkyd resins, acrylic resins, phenolic resins, such as novolaks or resorcinols, urea resins, polyvinyls, such as polyvinyl alcohols, polyvinylacetals, polyvinyl acetates or polyvinyl ethers, polycarbonates, polyolefins, such as polystyrene, polyvinyl chloride, polyethylene or polypropylene, poly(meth)acrylates and their copolymers, such as polyacrylic esters or polyacrylonitriles, polyamides, polyesters, polyurethanes, coumarone-indene resins and hydrocarbon resins, epoxy resins, unsaturated synthetic resins (polyesters, acrylates) with various curing mechanisms, waxes, aldehyde resins and ketone resins, gum, rubber and its derivatives and latices, casein, silicones and silicone resins; individually or in mixtures. It is unimportant whether the aforementioned high molecular mass organic compounds are in the form of plastic masses or melts or in the form of spinning solutions, dispersions, varnishes, paints or printing inks. Depending on the intended use, it proves advantageous to utilize the pigment composition according to the present invention as a blend or in the form of prepared products or dispersions. Based on the high molecular mass organic material to be pigmented, the pigment composition according to the present invention is employed in an amount of 0.05 % to 30 %, preferably 0.1 % to 15 %, by weight.

The pigment composition according to the present invention is also useful as a colorant for color filters for additive as well as subtractive color generation and also as a colorant for electronic inks or electronic paper.

The pigment composition according to the present invention can also be used in security printing applications, and may also contain a fluorescent dye or pigment therein. For example, fluorescent dyes such as stilbene benzoxazoyl derivatives or naphthalene benzoxazoyl derivatives, or fluorescent pigments such as benzoxazone derivatives, can be used.

The following provides a more detailed explanation of the present invention by using examples and comparative examples, without limiting the present invention to these examples.

EXAMPLES

The methods used to prepare pigment compositions and electrophotographic toner samples used in the examples and comparative examples are described below. The resulting samples were evaluated according to the methods described in the final section of the present examples.

(Preparation of Pigment Composition)

In each case, pigments P1 and P2, and optionally pigments P3 and/or P4, are mixed together in a weight ratio as indicated in the following example to prepare a pigment composition.

(Preparation of Samples for Evaluating Electrophotographic Toner Properties)

5 parts of a pigment composition (colorant), 1 part of a charge control agent Copy Charge® N5P-01 (Clariant) and 7 parts of a releasing agent Ceridust® 2051 (Clariant) were homogeneously introduced into 88 parts of a polyester resin (Finetone® 382ES, Reichhold Chemicals) for 30 minutes using a kneading device. This composition was then ground with an ordinary laboratory mill and then classified by a centrifugal classifier. Moreover, 1 part of a flow improver HDK® H2000T (Wacker) was externally added to prepare a toner.

5 g of the toner and 20 g of a solvent (tetrahydrofuran) were weighed in a 50 ml plastic bottle and then shaken for about 45 minutes with a vertical paint shaker to completely dissolve the resin. The finished ink (pigment concentration: 6 %) was used to color a coated paper with a No. 4 bar coater, and dried using a hot plate. The wet coated amount when using the No. 4 bar coater was 36 μm. The colored sample was used as a simulation sample for evaluating electrophotographic properties and was evaluated for hue, coloring strength and the like. The results are shown in Tables 1 to 4.

Example 1

A toner was obtained according to the procedure described above using PV Fast Brown HFR (Pigment Brown 25, Clariant) for pigment P1, PV Fast Blue BG (Pigment Blue 15:3, Clariant) for pigment P2, and a weight ratio between these pigments of 120:80. Using this toner of Example 1, a sample for evaluating electrophotographic toner properties was prepared according to the method described above, and evaluated by the below-mentioned methods. The results are shown in Tables 1 and 2.

Examples 2 and 3

Samples for pigment compositions and samples for evaluating electrophotographic toner properties were prepared and evaluated in the same manner as in Example 1 with the exception of changing the weight ratio of P1 and P2 in Example 1 to 100:100 (Example 2) and 80:120 (Example 3). The results are shown in Table 1. Moreover, regarding Example 2, the results from the evaluation of the weather resistance, charging properties and image qualities are shown in Tables 5, 6 and 7.

Example 4

A sample for evaluating electrophotographic developer properties was prepared and evaluated using the same method and under the same conditions as in Example 1 with the exception of using PV Fast Brown RL (Pigment Brown 41, Clariant) for pigment P1 and a weight ratio of P1 and P2 as shown in Table 2. The results are shown in Table 2.

Example 5

A sample for evaluating electrophotographic toner properties was prepared and evaluated using the same method and under the same conditions as in Example 1 with the exception of using Chromophthal Brown 5R (Pigment Brown 23, BASF) for pigment P1 and a weight ratio of P1 and P2 as shown in Table 2. The results are shown in Table 2.

Example 6

A sample for evaluating electrophotographic toner properties was prepared and evaluated using the same method and under the same conditions as in Example 1 with the exception of using Permanent Red HFG (Pigment Red 38, Clariant) for pigment P1 and a weight ratio of P1 and P2 as shown in Table 2. The results are shown in Table 2.

Examples 7 to 10

In each case, a sample for evaluating electrophotographic toner properties was prepared and evaluated using the same method and under the same conditions as in Example 1 with the exception of using a weight ratio of pigment P1 (Pigment Brown 25) and pigment P2 (Pigment Blue 15:3) as shown in Table 3, and adding other pigments P3 and P4 in a weight ratio as shown in the table. The results are shown in Table 3. Moreover, regarding Example 10, the results from the evaluation of the weather resistance, charging properties and image qualities are also shown in Tables 5, 6 and 7.
In Table 3, PV Fast Yellow HG (Pigment Yellow 180, Clariant) was used for pigment (P4), and PV Fast Violet RL (Pigment Violet 23, Clariant) was used for pigment (P3).

Example 11

A sample for evaluation of electrophotographic toner properties was prepared and evaluated using the same procedure and under the same conditions as in Example 10 with the exception of using PV Fast Red D3G (Pigment Red 254, Clariant) instead of the PV Fast Yellow HG (Pigment Yellow 180, Clariant) used in Example 10. The results are shown in Table 4.

Example 12

A sample for evaluation of electrophotographic toner properties was prepared and evaluated using the same procedure and under the same conditions as in Example 10 with the exception of using PV Fast Orange GRL (Pigment Orange 43, Clariant) instead of the PV Fast Yellow HG (Pigment Yellow 180, Clariant) used in Example 10. The results are shown in Table 4.

Example 13

A sample for evaluation of electrophotographic toner properties was prepared and evaluated using the same procedure and under the same conditions as in Example 10 with the exception of using a green pigment PV Fast Green GNX (Pigment Green 7, Clariant) instead of the PV Fast Yellow HG (Pigment Yellow 180, Clariant) used in Example 10. The results are shown in Table 4.

Comparative Example 1

A sample for evaluation of electrophotographic toner properties was prepared and evaluated according to the above-mentioned procedure using carbon black (Color Black FW200, Pigment Black 7, Orion) as a black pigment. The results are shown in Table 1. In addition, the results from the evaluation of the weather resistance, charging properties and image qualities are also shown in Tables 5, 6 and 7.

Comparative Example 2

A sample for evaluation of electrophotographic toner properties was prepared and evaluated using the same method and under the same conditions as in Example 1 with the exception of using PV Fast Yellow H2R (Pigment Yellow 139, Clariant) for pigment P1 and adding it in a weight amount as shown in Table 2. The results are shown in Table 2.

Comparative Example 3

A sample for evaluation of electrophotographic toner properties was prepared and evaluated using the same method and under the same conditions as in Example 1 with the exception of using PV Fast Yellow H3R (Pigment Yellow 181, Clariant) for pigment P1 and adding it in a weight amount as shown in Table 2. The results are shown in Table 2.

Comparative Example 4

A sample for evaluation of electrophotographic toner properties was prepared and evaluated using the same method and under the same conditions as in Example 1 with the exception of using Novoperm Orange H5G70 (Pigment Orange 62, Clariant) for pigment P1 and adding it in a weight amount as shown in Table 2. The results are shown in Table 2.

Comparative Example 5

A sample for evaluation of electrophotographic toner properties was prepared and evaluated using the same method and under the same conditions as in Example 1 with the exception of using PV Fast Orange H2GL (Pigment Orange 64, Clariant) for pigment P1 and adding it in a weight amount as shown in Table 2. The results are shown in Table 2.

Comparative Example 6

A sample for evaluation of electrophotographic toner properties was prepared and evaluated using the same method and under the same conditions as in Example 1 with the exception of using PV Fast Orange GRL (Pigment Orange 43, Clariant) for pigment P1 and adding it in a weight amount as shown in Table 2. The results are shown in Table 2.

Comparative Example 7

A sample for evaluation of electrophotographic toner properties was prepared and evaluated using the same method and under the same conditions as in Example 1 with the exception of using PV Fast Scarlet 4RF (Pigment Red 242, Clariant) for pigment P1 and adding it in a weight amount as shown in Table 2. The results are shown in Table 2.

Comparative Example 8

A sample for evaluation of electrophotographic toner properties was prepared and evaluated using the same method and under the same conditions as in Example 1 with the exception of using PV Fast Red D3G (Pigment Red 254, Clariant) for pigment P1 and adding it in a weight amount as shown in Table 2. The results are shown in Table 2.

Comparative Examples 9 and 10

In each case, a sample for evaluation of electrophotographic toner properties was prepared and evaluated using the same procedure and under the same conditions as in Example 1 with the exception of using no pigment P1 and adding other pigments in combination with pigment P2 (Pigment Blue 15:3) in a weight amount as shown in Table 3. The results are shown in Table 3. Here, PV Fast Yellow HG (Pigment Yellow 180, Clariant) was used for pigment P4, Permanent Carmine L5B01 (Pigment Red 57:1, Clariant) was used as M (magenta) pigment, PV Fast Red D3G (Pigment Red 254, Clariant) was used as R (red) pigment, and PV Fast Green GNX (Pigment Green 7, Clariant) was used as G (green) pigment.

The following provides a summary of Tables 1 to 6.

<Table 1>

The results from the careful examination of the pigment weight ratios of P1 and P2 are shown in Table 1. It is clear that favorable results are obtained at a weight ratio of P1 :P2 of 31:69 to 69:31, and particularly 40:60 to 60:40.

<Table 2>

The results from the examination of suitability of pigments for use as pigment P1 are shown in Table 2. It is indicated that the expected color properties are obtained only when using pigments having a maximum absorption wavelength within the range of 460 nm to 530 nm and a half-value wavelength (long wavelength side) of 550 nm or more.

<Table 3>

The results from the examination of the influence of pigments P3 and P4 are shown in Table 3. It is ascertained based on the results from Examples 7 to 9, that the use of violet pigments for pigment P3 makes it possible to obtain a higher coloring strength. In addition, as shown in Example 10, by the addition of yellow pigments as pigment P4, a further reduction in the color difference is possible.

<Table 4>

The results from the examination regarding whether pigments other than yellow can be used are shown in Table 4. Applicability of pigments having a subsidiary absorption wavelength within the range of 400 nm < $\lambda_P$ < 460 nm was examined. The results indicate that such pigments shown in Table 4 can be used as pigment P4, though the color properties are poorer compared to those of yellow pigments.

<Table 5>

The results from the evaluation of light stability of the resulting images are shown in Table 5. As indicated by the examples shown in Table 5, it was found that Example 2 of the present invention has a value for dE of 2.0 or less in comparison with Comparative Example 1. On the basis of this result, it was ascertained that, regarding color changes due to color fading, the light stability was equal to or better than that of carbon black.

<Table 6>

The results from the evaluation of toner charging properties and the quality of developed images are shown in Table 6. The formulation of Comparative Example 1 based on carbon black had a problem in respect to charge stability, and produced poor image quality and image density under high temperatures and humidity conditions. By using the present invention, it is possible to solve this problem; that is to achieve satisfactory image density while maintaining charge stability.

<Evaluation Methods>

(Method for Measuring Optical Absorption)

130 g of glass beads, 5 g of a dispersant (Ajisper PB821, Ajinomoto Fine-Techno) and 35 g of methyl ethyl ketone were weighed in a 250 ml plastic bottle, followed by shaking for 5 minutes with a paint shaker to adequately dissolve the dispersant and adding 10 g of a pigment and further dispersing the pigment with a paint shaker for 1 hour. After the completion of the dispersion, methyl ethyl ketone was slowly added to dilute the dispersion to a pigment concentration of 0.02 % by weight. The absorption spectrum of the pigment liquid dispersion filled into a quartz cell having a path length of 1 cm was measured over the wavelength region of 400 nm to 700 nm using a spectrophotometer (Spectra Flash SF600, Datacolor International).

(Method for Evaluating Image Hue)

In respect to a print having a black image (solid) obtained using said printing ink, the black image was quantitatively evaluated in respect to its color difference (dE) and coloring strength (%) by colorimetry using a spectrophotometer (Spectra Flash SF600, Datacolor International) at a viewing angle of 10° and using a D65 light source for the measurement light source. The hue is based on the definition of the color system standardized in the Commission Internationale de l'Eclairage (CIE). In addition, the coloring strength is calculated from the integration of spectral reflectance in the visible light region. As a reference, a carbon black pigment (Comparative Example 1) was used.

Here, compared with carbon black pigment (Comparative Example 1), a color difference (dE) at wet 36 microns of 2.00 or less and coloring strength (%) of 90 or more were regarded as being favorable color properties.

(Method for Evaluating Weather Resistance)

The color difference (dE) was measured by exposing a colored sample for a predetermined period of time on a Sun Test Xenon Fade-o-Meter (irradiation intensity: 40 W/cm$^2$) and then subjecting the sample to colorimetry using a spectrophotometer (Spectra Flash SF600, Datacolor International) at a viewing angle of 10° and using a D65 light source for the measurement light source. As a reference, Comparative Example 1 was used.

(Method for Evaluating Charging Properties)

The prepared toner was evaluated using charge amount evaluation (q/m measurement stand) and a commercially available electrophotographic copier. Measurement of charge amount was carried out on a standard q/m measurement stand. The prepared toner (having a particle size of 4 $\mu$m to 25 $\mu$m) was activated in a ball mill using a carrier made of magnetite particles coated with a silicone and having a size of 50 $\mu$m to 200 $\mu$m.

The carrier was prevented from being mixed in when the toner was blown off, using a sieve having a mesh size of 45 μm. Measurements were carried out at relative atmospheric humidity of about 50 %. The q/m values (μC/g) reported in the following tables were measured as a function of activation time.

Image qualities were evaluated by using an evaluation apparatus obtained by partially modifying a commercially available electrophotographic copier (equipped with an amorphous selenium photoconductor) and setting the fixing roller to 255 mm/sec. A toner prepared according to the above-mentioned method was filled, and after allowing it to stand for 5 hours in environments at 25 °C and 50 % RH and 25 °C and 90 % RH, images were formed using a test pattern and then evaluated.

In Table 7, rating was carried out based on the following criteria in respect to the rise of charge, charge stability, charge stability under high temperature and high humidity conditions, and image density. The image density was evaluated using a Spectroeye portable colorimeter (Spectris).

Rise of Charge = Charge amount after stirring for 5 minutes/charge amount after stirring for 120 minutes × 100

90 % or higher: O
80 % or higher: Δ
Less than 80 % : ×

Charge stability = Charge amount after stirring for 5, 10 and 30 minutes/charge amount after stirring for 120 minutes × 100

90 % or higher: ○
80 % or higher: Δ
Less than 80 %: ×

Charge stability under high temperature and high humidity conditions = Charge retention rate = charge amount (25 °C, 90 % RH)/charge amount (25°C, 50 % RH) × 100

80 % or higher: ○
70 % or higher: Δ
Less than 70 %: ×

Image density = ID

(the image density when the amount of attached toner is 0.5 mg/cm$^2$)

1.5 or more: ○
1.3 to 1.5: Δ
Less than 1.3: ×

[Table 1] Examples 1 to 3, Comparative Example 1

| Example | Pigment Composition (parts by weight) | | | Evaluation Results | |
|---|---|---|---|---|---|
| | Carbon black | Pigment P1 | Pigment P2 | Color difference (dE) 2.00 or less | Coloring strength (%) 90 or more |
| 1 | -- | 120 | 80 | 0.91 | 94 |
| 2 | -- | 100 | 100 | 0.68 | 95 |

(continued)

| Example | Pigment Composition (parts by weight) | | | Evaluation Results | |
|---|---|---|---|---|---|
| | Carbon black | Pigment P1 | Pigment P2 | Color difference (dE) 2.00 or less | Coloring strength (%) 90 or more |
| 3 | -- | 80 | 120 | 1.76 | 96 |
| Comp. 1 | 100 | -- | -- | -- | 100 |

[Table 2] Examples 1 and 4 to 6, Comparative Examples 1 and 2 to 8

| Example | Pigment Composition (parts by weight) | | | Evaluation Results | | Max. absorption wavelength (nm) | Half-value wavelength (long wavelength side) (nm) |
|---|---|---|---|---|---|---|---|
| | Carbon black | Pigment P1 | Pigment P2 | Color difference (dE) 2.00 or less | Coloring Strength (%) 90 or more | 460 to 530 nm | 500 nm or more |
| Comp. 1 | 100 | -- | -- | -- | 100 | -- | -- |
| 1 | -- | 120 (PBr25) | 80 | 0.91 | 94 | 490 | 550 |
| 4 | -- | 120 (PBr41) | 80 | 0.90 | 94 | 490 | 590 |
| 5 | -- | 120 (PBr23) | 80 | 1.07 | 94 | 490 | 580 |
| 6 | -- | 120 (PO38) | 80 | 1.70 | 91 | 500 | 550 |
| Comp. 2 | -- | 130 (PY139) | 70 | 20.30 | 79 | 420 | 500 |
| Comp. 3 | -- | 130 (PY181) | 70 | 25.00 | 65 | 400 | 530 |
| Comp. 4 | -- | 100 (PO62) | 100 | 15.88 | 62 | 440 | 520 |
| Comp. 5 | -- | 130 (PO64) | 70 | 3.20 | 79 | 500 | 540 |
| Comp. 6 | -- | 100 (PO43) | 100 | 3.26 | 84 | 540 | 600 |
| Comp. 7 | -- | 120 (PR242) | 80 | 2.83 | 82 | 540 | 560 |
| Comp. 8 | -- | 100 (PR254) | 100 | 3.30 | 86 | 580 | -- |

[Table 3] Examples 7 to 10, Comparative Examples 9 and 10

| Example | Pigment Composition (parts by weight) | | | | | | | | Evaluation Results | |
|---|---|---|---|---|---|---|---|---|---|---|
| | Carbon black | P1 | P2 | P3 | P4 | M | R | G | Color difference (dE) 2.00 or less | Coloring strength (%) 90 or more |
| 7 | -- | 96 | 64 | 40 | | | | | 1.93 | 98 |

(continued)

| Example | Pigment Composition (parts by weight) | | | | | | | | Evaluation Results | |
|---|---|---|---|---|---|---|---|---|---|---|
| | Carbon black | P1 | P2 | P3 | P4 | M | R | G | Color difference (dE) 2.00 or less | Coloring strength (%) 90 or more |
| 8 | -- | 108 | 72 | 20 | | | | | 1.08 | 97 |
| 9 | -- | 114 | 76 | 10 | | | | | 0.92 | 97 |
| 10 | -- | 80 | 50 | 20 | 50 | | | | 0.42 | 94 |
| Comp. 9 | -- | -- | 50 | | 100 | 50 | | | 2.89 | 84 |
| Comp. 10 | -- | -- | 50 | | | | 100 | 50 | 3.29 | 88 |

[Table 4] Examples 11 to 13

| Example | Pigment Composition (parts by weight) | | | | | Color difference (dE) 2.00 or less | Coloring strength (%) 90 or more |
|---|---|---|---|---|---|---|---|
| | Carbon black | Pigment | | | | | |
| | | P1 | P2 | P3 | P4 | | |
| 11 | -- | 80 | 50 | 20 | 50 PR254 | 1.31 | 94 |
| 12 | -- | 80 | 50 | 20 | 50 PO43 | 1.63 | 92 |
| 13 | -- | 80 | 50 | 20 | 50 PGr7 | 1.11 | 95 |

[Table 5] Evaluation of Light Stability

| | Color Difference (dE) Acceptable: 2.0 or less | | | |
|---|---|---|---|---|
| Exposure Time | 50 h | 100 h | 150 h | 200 h |
| Comp.Example 1 | 0.55 | 0.96 | 1.10 | 1.19 |
| Example 2 | 0.44 | 0.44 | 0.62 | 1.02 |
| Example 10 | 0.50 | 0.64 | 0.74 | 0.87 |

[Table 6]

| | Charge Amount ($\mu$C/g) | | | | Charge amount (25 °C, 50 % RH) | Charge amount (25 °C, 90 % RH) | Charge retention rate (%) |
|---|---|---|---|---|---|---|---|
| Stirring Time | 5 min. | 10 min. | 30 min. | 120 min. | | | |
| Example 2 | -13 | -14 | -14 | -14 | -14 | -12 | 86 |
| Example 10 | -14 | -14 | -15 | -15 | -15 | -12 | 80 |
| Comp.Ex.1 | -9 | -11 | -13 | -14 | -14 | -9 | 64 |

[Table 7]

| Example | Rise of Charge | Charge Stability | Charge Stability at High Temperature/ High Humidity | Image Density |
|---|---|---|---|---|
| 2 | ○ | ○ | ○ | ○ |
| 10 | ○ | ○ | ○ | ○ |
| Comp.1 | × | Δ | × | ○ |

## Claims

1. A black pigment composition, comprising, as essential pigments thereof, a pigment P1 having a maximum absorption wavelength $\lambda_{max}$ (nm) within the range of $460 \leq \lambda_{max} \leq 530$ and a half-value wavelength of the absorption spectrum (on the long wavelength side) of 550 nm or more, and a pigment P2 having a maximum absorption wavelength $\lambda_{max}$ (nm) within the range of $600 \leq \lambda_{max} \leq 700$, as measured in the form of a dispersion in methyl ethyl ketone, wherein pigment P1 is selected from the group consisting of monoazo pigments, disazo pigments, condensed azo pigments, naphthol AS pigments and benzimidazolone pigments.

2. A black pigment composition as claimed in claim 1, wherein the pigment P1 is one or more pigments selected from the group consisting of C.I. Pigment Brown 23, Pigment Brown 25, Pigment Brown 41 and Pigment Red 38.

3. A black pigment composition as claimed in claim 1 or 2, wherein the pigment P2 is one or more pigments selected from the group consisting of C.I. Pigment Blue 15, Pigment Blue 15:1, Pigment Blue 15:2, Pigment Blue 15:3, Pigment Blue 15:4, Pigment Blue 15:5, Pigment Blue 15:6 and Pigment Blue 16.

4. A black pigment composition as claimed in any one of claims 1 to 3, wherein the composition further comprises one or more pigments P3 having an absorption peak wavelength $\lambda_p$ (nm) within the range of $530 < \lambda_p < 600$.

5. A black pigment composition as claimed in claim 4, wherein the pigment P3 is one or more pigments selected from the group consisting of C.I. Pigment Orange 34, Pigment Orange 36, Pigment Orange 38, Pigment Orange 43, Pigment Orange 62, Pigment Orange 68, Pigment Orange 70, Pigment Orange 72, Pigment Orange 74, Pigment Red 31, Pigment Red 48:4, Pigment Red 57:1, Pigment Red 122, Pigment Red 146, Pigment Red 147, Pigment Red 150, Pigment Red 184, Pigment Red 238, Pigment Red 242, Pigment Red 254, Pigment Red 269, Pigment Violet 19, Pigment Violet 23 and Pigment Violet 32.

6. A black pigment composition as claimed in any one of claims 1 to 5, wherein the composition further comprises one or more pigments P4 having an absorption peak wavelength $\lambda_p$ (nm) within the range of $400 < \lambda_p < 460$.

7. A black pigment composition as claimed in claim 6, wherein the pigment P4 is one or more pigments selected from the group consisting of C.I. Pigment Yellow 74, Pigment Yellow 120, Pigment Yellow 139, Pigment Yellow 151, Pigment Yellow 155, Pigment Yellow 180, Pigment Yellow 181, Pigment Yellow 185, Pigment Yellow 213, Pigment Green 7, Pigment Green 36, Pigment Red 254 and Pigment Orange 43.

8. A black pigment composition as claimed in any one of claims 1 to 7, wherein the pigment composition ratio in parts by weight of (P1+P2):P3:P4 is 60 to 100 : 0 to 40 : 0 to 40 based on 100 parts by weight of the total of pigments P1, P2, P3 and P4, and the pigment composition ratio in parts by weight of P1 :P2 is 31 to 69 : 69 to 31 based on 100 parts by weight of the total of pigments P1 and P2.

9. A composition for a printing ink, plastic composition, dry electrophotographic toner or developer, wet electrophotographic toner or developer, inkjet ink, color filter resist ink, paint, varnish, or powder coating, comprising, at least, a black pigment composition according to any one of claims 1 to 8, and a binder resin.

10. A composition as claimed in claim 9, wherein the binder resin is selected from a vinyl chloride resin, an acrylic resin, an acrylic-silicone resin, a styrene-acrylic resin, a silicone resin, a fluororesin, a urethane resin, an unsaturated or saturated polyester resin, an epoxy resin, a PET resin, a polycarbonate resin and a plant-derived (biomass) resin.

## Patentansprüche

1. Schwarze Pigmentzusammensetzung, umfassend als wesentliche Pigmente davon ein Pigment P1 mit einer Wellenlänge des Absorptionsmaximums $\lambda_{max}$ (nm) im Bereich von $460 \leq \lambda_{max} \leq 530$ und einer Halbwertswellenlänge des Absorptionsspektrums (auf der langwelligen Seite) von 550 nm oder mehr und ein Pigment P2 mit einer Wellenlänge des Absorptionsmaximums $\lambda_{max}$ (nm) im Bereich von $600 \leq \lambda_{max} \leq 700$ gemäß Messung in Form einer Dispersion in Methylethylketon, wobei das Pigment P1 aus der Gruppe bestehend aus Monoazo-Pigmenten, Disazo-Pigmenten, kondensierten Azo-Pigmenten, Naphthol-AS-Pigmenten und Benzimidazolon-Pigmenten ausgewählt ist.

2. Schwarze Pigmentzusammensetzung nach Anspruch 1, wobei es sich bei dem Pigment P1 um ein oder mehrere Pigmente aus der Gruppe bestehend aus C.I. Pigment Brown 23, Pigment Brown 25, Pigment Brown 41 und Pigment Red 38 handelt.

3. Schwarze Pigmentzusammensetzung nach Anspruch 1 oder 2, wobei es sich bei dem Pigment P2 um ein oder mehrere Pigmente aus der Gruppe bestehend aus C.I. Pigment Blue 15, Pigment Blue 15:1, Pigment Blue 15:2, Pigment Blue 15:3, Pigment Blue 15:4, Pigment Blue 15:5, Pigment Blue 15:6 und Pigment Blue 16 handelt.

4. Schwarze Pigmentzusammensetzung nach einem der Ansprüche 1 bis 3, wobei die Zusammensetzung ferner ein oder mehrere Pigmente P3 mit einer Absorptionsspitzenwellenlänge $\lambda_{max}$ (nm) im Bereich von $530 < \lambda_p < 600$ umfasst.

5. Schwarze Pigmentzusammensetzung nach Anspruch 4, wobei es sich bei dem Pigment P3 um ein oder mehrere Pigmente aus der Gruppe bestehend aus C.I. Pigment Orange 34, Pigment Orange 36, Pigment Orange 38, Pigment Orange 43, Pigment Orange 62, Pigment Orange 68, Pigment Orange 70, Pigment Orange 72, Pigment Orange 74, Pigment Red 31, Pigment Red 48:4, Pigment Red 57:1 , Pigment Red 122, Pigment Red 146, Pigment Red 147, Pigment Red 150, Pigment Red 184, Pigment Red 238, Pigment Red 242, Pigment Red 254, Pigment Red 269, Pigment Violet 19, Pigment Violet 23 und Pigment Violet 32 handelt.

6. Schwarze Pigmentzusammensetzung nach einem der Ansprüche 1 bis 5, wobei die Zusammensetzung ferner ein oder mehrere Pigmente P4 mit einer Absorptionsspitzenwellenlänge $\lambda_p$ (nm) im Bereich von $400 < \lambda_p < 460$ umfasst.

7. Schwarze Pigmentzusammensetzung nach Anspruch 6, wobei es sich bei dem Pigment P4 um ein oder mehrere Pigmente aus der Gruppe bestehend aus C.I. Pigment Yellow 74, Pigment Yellow 120, Pigment Yellow 139, Pigment Yellow 151, Pigment Yellow 155, Pigment Yellow 180, Pigment Yellow 181, Pigment Yellow 185, Pigment Yellow 213, Pigment Green 7, Pigment Green 36, Pigment Red 254 und Pigment Orange 43 handelt.

8. Schwarze Pigmentzusammensetzung nach einem der Ansprüche 1 bis 7, wobei das Pigmentzusammensetzungsverhältnis von (P1+P2):P3:P4 in Gewichtsteilen 60 bis 100: 0 bis 40: 0 bis 40, bezogen auf 100 Gewichtsteile der Gesamtmenge der Pigmente P1, P2, P3 und P4, und das Pigmentzusammensetzungsverhältnis von P1:P2 in Gewichtsteilen 31 bis 69: 69 bis 31, bezogen auf 100 Gewichtsteile der Gesamtmenge der Pigmente P1 und P2, beträgt.

9. Zusammensetzung für eine Druckfarbe, eine Kunststoffzusammensetzung, einen trockenen elektrophotographischen Toner oder Entwickler, einen nassen elektrophotographischen Toner oder Entwickler, eine Tintenstrahltinte, eine Farbfilterresisttinte, ein Anstrichmittel, einen Lack oder Pulverlack, umfassend mindestens eine schwarze Pigmentzusammensetzung nach einem der Ansprüche 1 bis 8 und ein Bindemittelharz.

10. Zusammensetzung nach Anspruch 9, wobei das Bindemittelharz aus einem Vinylchloridharz, einem Acrylharz, einem Acryl-Silikon-Harz, einem Styrol-Acryl-Harz, einem Silikonharz, einem Fluorharz, einem Urethanharz, einem ungesättigten oder gesättigten Polyesterharz, einem Epoxidharz, einem PET-Harz, einem Polycarbonatharz und einem von Pflanzen abgeleiteten Harz (Biomasse-Harz) ausgewählt ist.

**Revendications**

1. Composition de pigments noirs, comprenant, comme pigments essentiels de ladite composition, un pigment P1 ayant une longueur d'onde d'absorption maximum $\lambda_{max}$ (nm) dans la plage de $460 \leq \lambda_{max} \leq 530$ et une longueur d'onde mi-crête (côté grandes longueurs d'onde) du spectre d'absorption de 550 nm ou plus, et un pigment P2 ayant une longueur d'onde d'absorption maximum $\lambda_{max}$ (nm) dans la plage de $600 \leq \lambda_{max} \leq 700$, telle que mesurée sous forme de dispersion dans la méthyléthylcétone, le pigment P1 étant sélectionné dans le groupe constitué de pigments monoazoïques, de pigments diazoïques, de pigments azoïques condensés, de pigments naphtol AS et de pigments de type benzimidazolone.

2. Composition de pigments noirs selon la revendication 1, dans laquelle le pigment P1 consiste en un ou plusieurs pigments sélectionnés dans le groupe constitué des colorants C.I. Pigment Brown 23, Pigment Brown 25, Pigment Brown 41 et Pigment Red 38.

**3.** Composition de pigments noirs selon la revendication 1 ou 2, dans laquelle le pigment P2 consiste en un ou plusieurs pigments sélectionnés dans le groupe constitué des colorants C.I. Pigment Blue 15, Pigment Blue 15:1, Pigment Blue 15:2, Pigment Blue 15:3, Pigment Blue 15:4, Pigment Blue 15:5, Pigment Blue 15:6 et Pigment Blue 16.

**4.** Composition de pigments noirs selon l'une quelconque des revendications 1 à 3, la composition comprenant en outre un ou plusieurs pigments P3 ayant une longueur d'onde au pic d'absorption $\lambda_p$ (nm) dans la plage de 530 < $\lambda_p$ < 600.

**5.** Composition de pigments noirs selon la revendication 4, dans laquelle le pigment P3 consiste en un ou plusieurs pigments sélectionnés dans le groupe constitué des colorants C.I. Pigment Orange 34, Pigment Orange 36, Pigment Orange 38, Pigment Orange 43, Pigment Orange 62, Pigment Orange 68, Pigment Orange 70, Pigment Orange 72, Pigment Orange 74, Pigment Red 31, Pigment Red 48:4, Pigment Red 57:1, Pigment Red 122, Pigment Red 146, Pigment Red 147, Pigment Red 150, Pigment Red 184, Pigment Red 238, Pigment Red 242, Pigment Red 254, Pigment Red 269, Pigment Violet 19, Pigment Violet 23 et Pigment Violet 32.

**6.** Composition de pigments noirs selon l'une quelconque des revendications 1 à 5, la composition comprenant en outre un ou plusieurs pigments P4 ayant une longueur d'onde au pic d'absorption $\lambda_p$ (nm) dans la plage de 400 < $\lambda_p$ < 460.

**7.** Composition de pigments noirs selon la revendication 6, dans laquelle le pigment P4 consiste en un ou plusieurs pigments sélectionnés dans le groupe constitué des colorants C.I. Pigment Yellow 74, Pigment Yellow 120, Pigment Yellow 139, Pigment Yellow 151, Pigment Yellow 155, Pigment Yellow 180, Pigment Yellow 181, Pigment Yellow 185, Pigment Yellow 213, Pigment Green 7, Pigment Green 36, Pigment Red 254 et Pigment Orange 43.

**8.** Composition de pigments noirs selon l'une quelconque des revendications 1 à 7, dans laquelle le rapport de composition en pigments en parties en poids de (P1+P2):P3:P4 est de 60 à 100:0 à 40:0 à 40 relativement à 100 parties en poids du total des pigments P1, P2, P3 et P4, et le rapport de composition en pigments en parties en poids de P1:P2 est de 31 à 69:69 à 31 relativement à 100 parties en poids du total des pigments P1 et P2.

**9.** Composition pour une encre d'imprimerie, une composition de plastique, un toner ou un développeur électrophotographique sec, un toner ou un développeur électrophotographique humide, une encre d'impression au jet d'encre, une encre de résist pour filtre de couleur, une peinture, un vernis, ou un revêtement de poudre, comprenant, au moins, une composition de pigments noirs selon l'une quelconque des revendications 1 à 8, et une résine de liaison.

**10.** Composition selon la revendication 9, dans laquelle la résine de liaison est sélectionnée parmi une résine de chlorure de vinyle, une résine acrylique, une résine acrylique-silicone, une résine styrène-acrylique, une résine de silicone, une résine fluorée, une résine uréthanique, une résine de polyester insaturé ou saturé, une résine époxyde, une résine de PET, une résine de polycarbonate et une résine dérivée de plantes (biomasse).

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4571585 B
- JP 2011068737 A

- JP H09329912 A